# EUROPEAN PATENT SPECIFICATION

(11) **EP 3 257 199 B1**
(45) Date of publication and mention of the grant of the patent: **25.12.2019**
(21) Application number: 15797437.9
(22) Date of filing: 29.10.2015
(51) Int. Cl.: H04L 12/26

(54) **SERVICE PERFORMANCE MONITORING IN A VIRTUALIZED COMMUNICATION NETWORK**
DIENSTLEISTUNGSÜBERWACHUNG IN EINEM VIRTUALISIERTEN KOMMUNIKATIONSNETZWERK
SURVEILLANCE DE PERFORMANCE DE SERVICE DANS UN RÉSEAU DE COMMUNICATION VIRTUALISÉ

(30) Priority: 23.12.2014 WO PCT/IB2014/067290
(43) Date of publication of application: 20.12.2017
(73) Proprietor: Telefonaktiebolaget LM Ericsson (publ), 164 83 Stockholm (SE)
(72) Inventor: RABIPOUR, Rafi, Cote St. Luc, Québec H4W 2T2 (CA); LINDGREN, Tommy, S-18134 Lidingö (SE)
(74) Representative: Zacco Sweden AB
(86) International application number: PCT/IB2015/058371
(87) International publication number: WO 2016/103069

(56) References cited:
- US-A1- 2008 049 630
- "Network Function Virtualization (NFV) Management and Orchestration;GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.8.0, 21 November 2014 (2014-11-21), pages 1-189, XP014228983, [retrieved on 2014-11-21]
- GIUSEPPE ACETO ET AL: "Cloud monitoring: A survey", COMPUTER NETWORKS, vol. 57, no. 9, 1 June 2013 (2013-06-01), pages 2093-2115, XP055080354, ISSN: 1389-1286, DOI: 10.1016/j.comnet.2013.04.001

## Description

### PRIORITY STATEMENT

This patent application claims priority based upon the prior PCT patent application entitled *"MEDIA PERFORMANCE MONITORING AND ANALYSIS",* application number PCT/IB2014/067290, filed December 23, 2014, by inventors Jimson Mah and Rafi Rabipour.

### TECHNICAL FIELD

This disclosure relates generally to service performance monitoring in a virtualized communication network, in which at least one network function is virtualized.

### BACKGROUND

In traditional telecommunications network operations, the conventional approach for the analysis or validation of quality of the media (or bearer) signal in a telephone call targeted for monitoring is to play out a known signal at one end of the call, record the signal at the other end, and assess the performance of the call by evaluating the quality and characteristics of the output signal, as compared to the known input signal, to determine metrics such as an objective quality score, delay, changes in the signal level or its spectral content, etc. These objective measures are checked against expected values to determine if the quality of the target call is as expected.

In the data communications context, there are also tools that "sniff' bearer packets on live networks and analyze Session Initiation Protocol (SIP), Real-Time Transport Protocol (RTP), and RTP Control Protocol (RTCP) performance to obtain statistics such as loss, jitter, delay, etc., at the points in the network where data is collected.

With the introduction of new media-related services, along with the ever-increasing complexity of the transport networks, there is increasing interest in validation and performance monitoring of these services.

Network Function Virtualization (NFV) is a relatively new domain of activity in the telecommunication industry, directing the evolution of telecommunication networks towards an architecture based on Cloud technologies, with the ultimate objective of accruing the same type of benefits realized in the Information Technology (IT) sector. However, the operation of telecom networks is bound by expectations and requirements that are much more demanding than those of IT. Furthermore, the IT industry's Cloud architecture had the opportunity to evolve and mature over time, whereas in the case of NFV, the pace of evolution is expected to be fast, involving the simultaneous deployment of many new components, new interfaces or open interfaces, new technologies, and a multi-vendor mix of equipment on an unprecedented scale. Experience shows that such a fast-paced integration along multiple dimensions, all of which are new, is likely to present nontrivial challenges in monitoring and managing performance, as well as in troubleshooting.

Therefore, performance monitoring of the media/service (or bearer) signal in the context of virtualization needs to be addressed.
"Network Function Virtualization (NFV) management and orchestration; GS NFV-MAN 001" ETSI draft; GS NFV MAN 001, European telecommunication standards institute (ETSI), 650, route des lucioles; F-06921 sophia- antipolis; france vol. ISG- NFV, no. V0.8.0, 21 november 2014 (2014-11-21), pages 1-189, XP014228983 describes a management and orchestration framework required for the provisioning of virtualised network functions (VNF).

### SUMMARY

The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 illustrates the reference architectural framework for Network Functions Virtualization;
Figure 2 illustrates a flow chart of an example method carried out by a bearer-processing node, which is a virtualized network function, according to one embodiment of the present invention;
Figure 3 illustrates a schematic block diagram of an example network node for carrying out the method of Figure 2, according to one embodiment of the present invention;
Figure 4 illustrates a schematic diagram of a bearer path from a terminal device to a data collection agent (DCA), for relaying accumulated performance and transmitting instructions to report performance metrics, according to one embodiment of the present invention;
Figure 5 illustrates an example of a data session topology;
Figure 6 shows an example of termination numbering for terminations on a bearer-processing node;
Figure 7 illustrates an example descriptor block for a node's terminations and upstream peer nodes;
Figure 8 shows an example of a node descriptor for a node in an example session topology;
Figure 9 illustrates the progression of topology data through nodes;
Figure 10 illustrates an example of the encapsulation of performance metrics;
Figure 11 illustrates an example of encapsulated control messages;
Figure 12 illustrates an example of a DCA's display of topology and performance metric;
Figure 13 illustrates an example of a DCA's display of geographical location and topology for in-path bearer-processing nodes;
Figure 14 illustrates a flow chart of an example method carried out by a bearer-processing node, which is a virtualized network function, according to one embodiment of the present invention;
Figure 15 illustrates a flow chart of an example method carried out by a bearer-processing node, which is a virtualized network function, according to another embodiment of the present invention;
Figure 16 illustrates a flow chart of an example method carried out by a data collection agent, according to one embodiment of the present invention;
Figure 17 illustrates a schematic block diagram of an example bearer-processing node or data collection node;
Figure 18 illustrates a schematic block diagram of a bearer-processing node, which is a virtualized network function, according to one embodiment of the present invention;

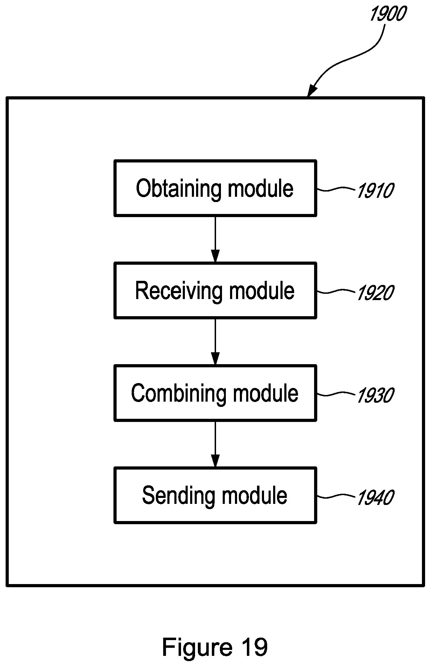

Figure 19 illustrates a schematic block diagram of a bearer-processing node, which is a virtualized network function, according to another embodiment of the present invention; and
Figure 20 illustrates a schematic block diagram of a data collection agent, according to one embodiment of the present invention.

### DETAILED DESCRIPTION

The discussion below should be taken to be exemplary in nature, and not as limiting of the scope of the present invention.

The intent of NFV, which is the subject of intense activity in the telecom industry, is to replace tailor-made telecommunication equipment with virtualized software applications to be deployed to operate on standard high-volume servers, which appear as "virtual machines" to the applications. By design, virtualization technologies are intended to decouple the software implementation of a given application from the underlying hardware resources. Consequently, virtualized systems are not designed to allow visibility, by the applications, into aspects such as the identity, or the performance of the underlying infrastructure that could nonetheless affect their respective performance and effectiveness.

The decoupling of the software application from the underlying hardware infrastructure has worked well for the IT industry, where performance requirements and expectations have traditionally been less strict than what is expected of telecommunication networks. The high performance expectations of telecom networks, some legislated, make it desirable to seek mechanisms that enhance the capability to troubleshoot issues that may manifest themselves in the form of bearer performance problems.

As such, an underlying system to provide end-to-end visibility into the state and performance of the bearer signal flowing through the components forming a network service can make a vast difference; it can facilitate direct insight into performance issues that may adversely affect the quality of service delivered to a network user, which ultimately shapes the perception that the user has of the quality of the service.

A concept for providing such insight was described in a patent application with application number PCT/IB2014/067290, filed on December 23, 2014, and entitled "*MEDIA PERFORMANCE MONITORING AND ANALYSIS*". The teachings of PCT/IB2014/067290 could be extended and applied to virtualized network functions (VNF) in monitoring bearer performance in data sessions served by any mix of VNF and legacy equipment. The teachings proposed in this disclosure allow improvement of performance for a broad range of communication applications, and deep insight for the purpose of bearer performance monitoring and troubleshooting. In the context of virtualization, access by the virtualized applications to some of the pieces of data/information related to the infrastructure supporting the virtualized applications can be used to achieve performance improvement in communication nodes and in the virtualized applications.

Generally stated, embodiments of the present invention enable the virtualized applications to obtain insight into information, metrics, and aspects of the performance of infrastructure resources that can be used to improve troubleshooting, and even allow the applications to achieve an optimal performance related to a data session carrying services, multimedia data, for example. In other words, VNFs are able to access infrastructure related information of the underlying infrastructure, information that is normally only visible to the underlying infrastructure. To do so, new operations, information elements and attributes on some reference points or interfaces are defined. The information elements could be parameters that identify specific actions, determine a particular piece of information to be delivered, specify related intervals, etc.

The operations, information elements and attributes are to provide a view into the state of the infrastructure resources serving the virtualized applications. Thus, the decoupling of the virtualized application from the underlying infrastructure would remain unaffected.

A form of open interfaces for these operations, information elements and attributes can be implemented, subject to standardization, which can allow the free mix of applications and infrastructure from any combination of vendors, both in the virtualized applications and infrastructure spaces.

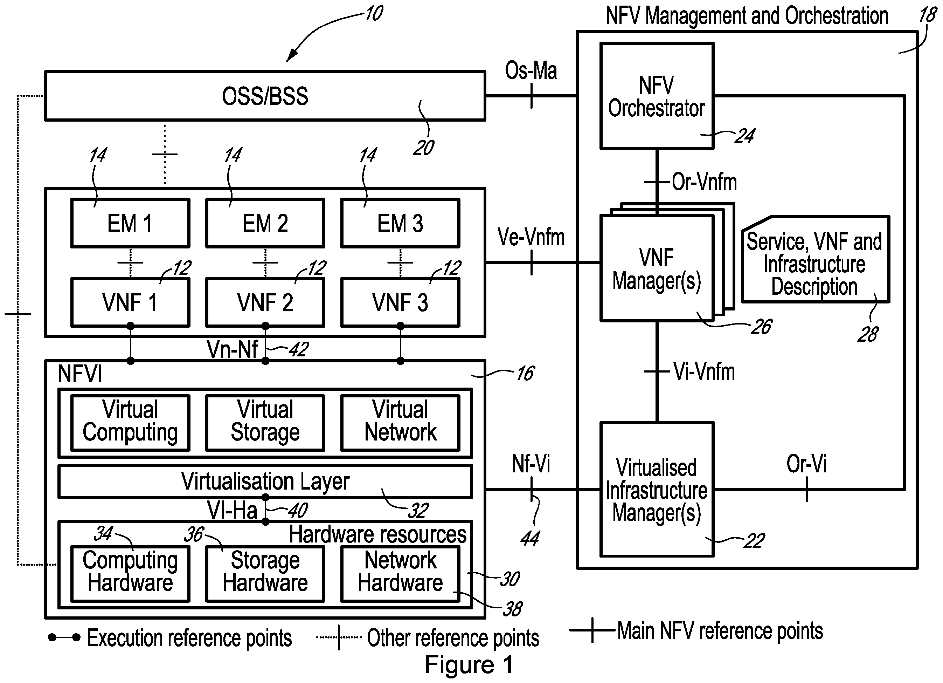

Figure 1 illustrates the reference architectural framework 10 defined by the ETSI NFV Industry Specification Group (ISG) in the ETSI GS NFV002 document entitled "Network Functions Virtualization (NFV); Architectural Framework".

This framework 10 defines the interaction between different functional blocks, via reference points. The framework 10 comprises the following elements: Virtualized network functions (VNFs) 12, Element Management System (EMS) 14, the Network Function Virtualization Infrastructure layer designated as NFVI 16, Network Function Virtualization Management and Orchestration (NFV MANO) 18 and operation and business support system (OSS/BSS) 20. The NFV MANO 18 comprises virtualized infrastructure managers (VIM) 22, an orchestrator 24, VNF managers 26, and a VNF and infrastructure description 28.

As mentioned above, a VNF is a virtualization of a network function, in a legacy network. Examples of network functions for virtualization are 3GPP Evolved Packet Core network elements, e.g. Mobility Management Entity (MME), Serving Gateway (SGW), Packet Data Network Gateway (PDN); elements in a home network, e.g. Residential Gateway (RGW); and conventional network functions, e.g. Dynamic Host Configuration Protocol (DHP) servers, firewalls, etc. It should be noted that a VNF can be deployed over multiple virtual machines (VMs), where each VM hosts a single component of the VNF, or, the whole VNF can be deployed in a single VM as well. Furthermore, a container could be used, instead of a VM, to run a VNF.

The NFVI 16 is used to run the virtualized software implementations of telecommunication applications. The NVFI 16 includes hardware resources 30, and, virtualized resources and a virtualization layer 32.

The hardware resources 30 include computing 34, storage 36 and network 38 resources that provide processing, storage and connectivity to VNFs through the virtualization layer 32, such as a hypervisor.

The virtualization layer 32 is responsible for abstracting and logically partitioning physical resources, enabling the software that implements the VNF to use the underlying virtualized infrastructure and providing virtualized resources to the VNF so that the VNF can be executed. Also, the virtualization layer 32 ensures that VNFs are decoupled from hardware resources 30 and therefore, the software can be deployed on different physical hardware resources.

The reference point VI-Ha 40 interfaces the virtualization layer 32 with the hardware resources 30 to collect relevant hardware resources state information for managing the VNFs without being dependent on any hardware platform.

The VNFs are using the execution environment, provided by the NFVI 16 and represented by the reference point Vn-Nf 42, to ensure portability to different hardware types. Vn-Nf 42 does not assume any specific control protocol.

The other elements of the framework 10 are well-known in the art and will not described in this disclosure.

Examples of information related to the underlying infrastructure, used as performance metrics, or parameters, for each compute node may include:
Identification of the processor type on which the VNF is running, along with relevant data such as its clock frequency, cache characteristics, the number of processor cores made available to the VNF, etc.;
The total physical network bandwidth available for use by the compute resource; the percentage of total used central processing unit (CPU) can be an indication of the computational load borne by the compute resource;
The percentage of total used network bandwidth, as an indication of the level of Input/Output (I/O) load of the network hardware;
The total storage space available for use by a compute resource of the infrastructure;
The percentage of the total used storage space;
The number of virtual machines sharing the same compute resources;
The geographic location of the hardware infrastructure serving the VNF;
Elapsed time since the instantiation of the VNF on a particular processor/CPU; this is intended to make it possible for the application to detect the migration of the virtual machine it is running on, for example; and
The number of tenants that the infrastructure is serving.

It should be noted that such information is conventionally only visible within the NFVI 16, but they are rendered accessible and available to the VNF, according to embodiments of the present invention. Also, it is understood that a compute node refers to any parts of the infrastructure that provides processing capabilities.

The new operations, information elements and attributes defined for the interfaces allow the virtualized network function: 1) to query the underlying infrastructure for the type of information mentioned above; 2) to be notified automatically (or periodically) of changes, such as changes to the clock frequency, the CPU load, the number of tenants, the network load, as well as migration events, etc.

These operations, information elements and attributes are preferably defined at least for the reference points Vn-Nf 42, and Nf-Vi 44 (see Figure 1). The operations, information elements and attributes on the reference point Vn-Nf 42 are available to the VNF executing on the infrastructure. The operations, information elements and attributes on the reference point Nf-Vi 44 can be also available to any authorized NFV functional block, like VIM 22, EMS 14, VNFM 26 and NFV Orchestrator 24 and OSS/BSS 20, either directly or via VIM 22, which can distribute the information to other elements. The operations, information elements and attributes exchanged on the different reference points may use different mechanisms and protocols.

The described operations, information elements and attributes to access infrastructure related information will allow virtualized network functions, engaged in bearer processing nodes for providing a network service in a virtualized network to collaborate with peer nodes, virtualized or not, to provide end-to-end visibility into performance issues , as will be described hereinbelow. The usage of the NFV architecture framework's interfaces will preserve the desired level of abstraction of the underlying infrastructure while permitting seamless visibility into performance issues in multi-vendor deployments.

In addition to the benefit of performance monitoring and troubleshooting of a network service during a data session, certain virtualized network functions can extract additional performance benefits from the access to the performance metric information related to the infrastructure, as illustrated in the examples below.

One example of a VNF that can benefit from such information is the software implementation of a gateway that implements a jitter buffer and jitter-buffer management strategy. Jitter buffers are managed based on the accumulation of statistics of packet arrival over the duration of the service. The length of the jitter buffer is revised continually, to adapt to the changes in the packet arrival statistics. In the case of virtualized applications, migration of the corresponding virtual machine from one hardware resource to another can give rise to a false perception of a change in statistics, whereas the real cause is the arrival-phase discontinuity due to the change of the processor assigned to the VNF. Knowledge of the migration event allows the corresponding VNF to be aware of the real cause. The VNF can then deploy an appropriate strategy to maintain processing phase continuity rather than adapting to the (wrong) perception of the change in the packet arrival statistics. Alternatively, the VNF can reset its statistical model, and start constructing a fresh model. Furthermore, the visibility of migration (and its frequency) can be a valuable indicator to troubleshooting and performance monitoring, since a high frequency of migration is likely to give rise to the perception of poor quality of audio, video, or data performance.

Information related to the infrastructure rendered accessible as described above can be also used to optimize the performance in the case of virtualized network functions that control quality/computation complexity trade-offs. For example, high-compression algorithms (e.g. for voice, video) can achieve higher compression ratios by conducting more thorough optimization iterations. This, however, would come at the expense of higher consumption of the CPU resources. Knowledge of the level of the load on the underlying hardware can help such a VNF to select the best trade-off between CPU and network bandwidth utilization, in order to optimize compression performance without causing the overload of the underlying hardware.

Similar to the above example, knowledge of the network bandwidth load in the underlying hardware would allow a VNF to strike a more appropriate balance in terms of the required compression efficiency, in order to achieve a more global optimization.

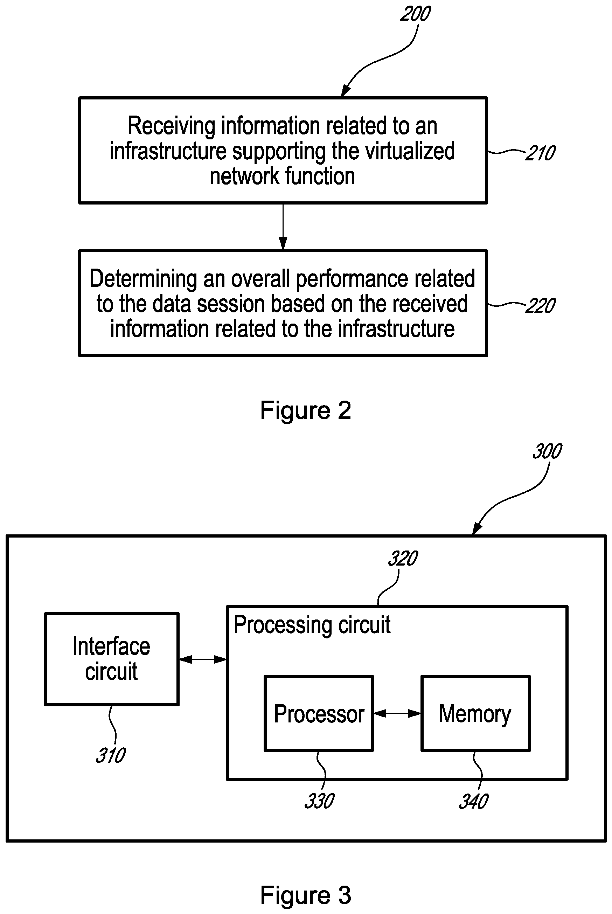

Now turning to Figure 2, a method 200 in a network node which is engaged in bearer or media processing during a data session, for example, will be described. The network node is assumed to be a virtualized network function. Also, the network node could be part of a multi-node bearer path for providing a network service.

In step 210, the network node receives information related to an infrastructure supporting the virtualized network function. This step could be performed in response to receiving an instruction to report one or more performance metrics related to the data session. In this case, responsive to receiving the instruction, the network node requests for the information related to the infrastructure. Optionally or alternatively, the network node can be configured to report such information on a regular basis, or based on a change of the requested information, for example. The information related to the infrastructure is received via the reference point Vn-Nf 42, for example. Examples of the information related to the infrastructure have been provided above.

In step 220, the network node determines an overall performance related to the data session based on the received information related to infrastructure. In other words, using the received information related to the infrastructure for the network node, the overall performance of the entire data session can be determined. Therefore, the quality of the whole data session can be evaluated and then troubleshooting and/or optimization or improvement can be applied to the data session.

For example, the network node can determine a performance optimization for the data session using the information related to the infrastructure. As mentioned before, the network node can determine the best trade-off between CPU and network bandwidth utilization, for example, in order to optimize the compression performance for voice and/or video signals. The network node can also determine a migration event and use it to optimize the performance of the audio or video quality, in the case of a jitter buffer, for example.

Figure 3 illustrates a network node 300 for carrying out the method 200.

The network node 300 comprises an interface circuit 310, and a processing circuit 320.

The interface circuit 310 is configured to communicate with other network nodes and is operationally connected to the processing circuit 320.

The processing circuit 320 comprises a processor 330 and a memory 340, operationally connected to the processor 330. The memory 340 contains instructions, programs and codes that, when executed, cause the processor 330 to perform method 200.

In other words, the network node comprises a computer program product comprising a computer readable memory storing instructions thereon, that, when executed by a network node, cause the network node to perform method 200.

It should be noted that the network node 300 is assumed to be a virtualized network function. As such, the interface circuit 310 and the processing circuit 320 are provided by the underlying infrastructure, e.g. hardware resources 30 of Figure 1.

As shown above, the teachings of the present disclosure can enhance the quality of service in a data session, in the context of virtualization or in a virtualized network. The term 'service' can comprise any applications, such as voice calls, multimedia data communications, etc. As such, the data session may carry voice calls and multimedia data or any other kinds of data.

More specifically, in the following, methods and network nodes used for monitoring end-to-end performance of a data session in a communication network comprising a plurality of nodes, at least one of which is a virtualized network function, will be described.

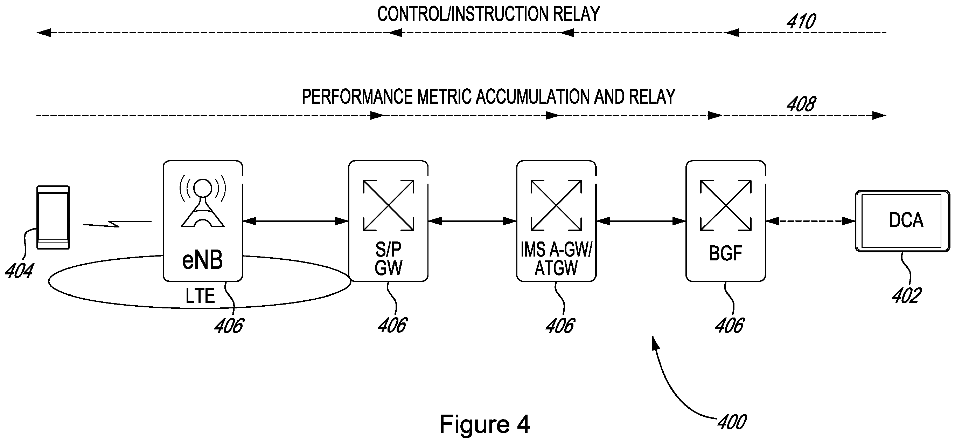

Figure 4 illustrates a multi-node bearer path 400 providing a service in a data session. For example, the service could be a point-to-point voice call, traversing the different nodes in the multi-node bearer path 400. A Data Collection Agent (DCA) 402 is connected to one end of the multi-node bearer path 400. A Long Term Evolution (LTE) device 404 or any other user equipment or mobile device is connected to the other end of the multi-node bearer path 400. The multi-node bearer path 400 comprises, for example, a plurality of nodes 406, such as an eNodeB or a base station, for receiving data from the LTE device 406, a Serving/Packet Data network Gateway (S/P Gateway), an Internet Protocol (IP) Multimedia Subsystem (IMS) Access Gateway (A-GW)/ Access Transfer Gateway (ATGW), a Border Gateway Function (BGF), etc.

The dashed lines show the direction 408 of relaying accumulated performance metric data from the LTE device 204 (on the left) towards the DCA 402 (on the right), and the direction 410 of relaying and distributing DCA 402 control messages. Note that the direction 410 is in the opposite direction of direction 408. Performance metric data thus flow from the LTE device 404 towards the data collection agent 402, in a manner where each bearer-processing node 406 in the path 400 receives performance data from its upstream node, and relays it to its downstream bearer-processing node after combining its own performance data and metrics. Note that as used here, "upstream" refers to the direction in which instructions flow from the DCA 402 to the bearer-processing nodes 406, while "downstream" refers to the direction in which performance data is relayed towards the DCA 402 from the bearer-processing nodes 406. Also, it should be noted that at least one of the bearer-processing nodes 406 in the path is a virtualized network function.

In some embodiments, the process of collecting or obtaining performance metrics takes place continually, e.g., at regular intervals, allowing the data collection agent 402 to receive and process the combined information package, to provide a glimpse into the state of the operation of the bearer-processing nodes in the data session for the time interval corresponding to the latest set of data, either in real time, or offline. The DCA 402 can send control messages to all nodes 406 that support the in-band protocol, as shown in Figure 4.

Two types of protocols are employed to implement the accumulation and relaying of performance metrics illustrated in Figure 4. The first type of protocol is used during session set-up to negotiate the establishment of the performance data traffic. The second type of protocol is the protocol that defines how performance data and control instructions are carried through the nodes 406 and acted upon.

New protocols or extensions of existing protocols may be used to establish traffic of performance data and control messages. Although it is possible to define a completely new protocol, an exemplary approach (described here) is to extend the SIP protocols already defined to set up Real Time Control Protocol (RTCP) Extended Reports (RTCP XR), and to extend them to provide for the end-to-end negotiation of the protocol for collection of performance data and distribution of the control instructions.

One possible implementation is to place specifications in the body of various SIP messages, in a similar manner as is used for Session Description Protocol (SDP) payloads. The new extensions proposed in this disclosure can be used, in various embodiments, to achieve the following:
- The protocol will signal the desire to establish the new type of payload, such as a new extension of RTCP XR. The negotiation process also serves to identify the direction of the flow of collected or obtained metrics; each node 406 collecting or obtaining such metrics (potentially from multiple connections/ports) would relay them in the direction from which the SIP request originated.
- The new payload type will carry the implicit requirement for each node 406 involved in the SIP negotiation to attempt to negotiate the same extension with all peer nodes associated with the same session.
- The full or partial range of performance measures/metrics and indicators to be collected/reported may be specified.
- The specification could be defined, optionally, to specify specific modes of data collection, including, for example, data collection to be initiated for specified time intervals, or data collection to be triggered by specific events, such as when certain performance thresholds are exceeded.
- In some embodiments, the protocol will indicate the version of the performance metric collection protocol to be used.
- In some embodiments, the protocol defines parameters to provide access control.

Similarly, new protocols or extensions of existing protocols may be used to provide for collection or obtention of performance data and for distribution of control instructions. Below, a protocol is described for transfer of performance metrics from bearer-processing nodes 406 to the data collection agent 402 and for the transfer of control information from the data collection agent 402 to the bearer-processing nodes 406. While it is possible to define a completely new protocol for this purpose, the preferred method would be to extend the capabilities of RTCP XR, especially since RTCP XR was already designed to accommodate extensions based on future needs.

In order to relay accumulated performance metric, the requirement for each bearer-processing node 406 is to build up the encapsulation for performance data by adding its own performance metrics, measured over the latest time interval or for the most recent event, to the encapsulation received from the upstream node. This cumulative package is then relayed to the next bearer-processing node downstream (as determined by the direction and the termination from which the SIP negotiation for data collection originated), such that the final set of data records arriving at the data collection agent 402 contains the full set of performance information pertaining to all participating bearer-processing nodes 406 in the session, for a given time interval.

Note that since RTCP (including RTCP XR) is defined only for peer-to-peer exchange of information, an important part of the extension addressed here is to define how the accumulation of performance information is to take place. Furthermore, since the voice/video/data session topology, not known a priori by the data collection agent 402, could be complex, e.g. in the case of teleconference scenarios, and dynamic, e.g. due to handover or changes in the number of conference attendees, it is necessary to define a mechanism that can allow the data collection agent 402 to construct the topology model for the session, and to correctly associate the collected or obtained data to their respective nodes 406 and their terminations/ports.

One example of how to achieve this is through the topology coding techniques described below. A systematic approach is required to label the nodes 406 involved in a voice/video/data session, as well as the connections linking them. This is needed in order for the DCA 402 to be able to construct a model of the call/service topology, to correctly associate performance metrics with the appropriate nodes and links, and to facilitate the transmission of control messages to the desired nodes.

A number of factors need to be considered in defining an appropriate method for encoding the topology of the session. First, bearer-processing nodes 406 can enter and leave the topology dynamically, as the session topology changes due to call processing events, handovers, etc. Second, the knowledge of the session topology has to be built up incrementally, and updated over time, with each node contributing its own knowledge and information in such a manner that its topological relationship with upstream nodes are manifested and decoded uniquely. Even for a session with a stable topology, the data collection agent 402 is likely to see changes in the topology information as updated performance and topology data arrive from more distant nodes in the bearer path 400 asynchronously. Similarly, a given node 406 in the bearer path 400 is likely to receive topology information from the upstream nodes that may vary over time. Further, since each in-path node has a role in building up the topology information, it is necessary for a given node to present topology information to its downstream node in a way that the labels applied to the same upstream nodes and terminations remain constant over time. The continuity is required because each node has to be able to keep track of upstream nodes from one data collection interval/epoch to the next. However, as long as the node/termination labels passed on to the downstream node retain their correspondence to the applicable (upstream) node and termination, a node does not necessarily have to use the same labels that it received from its upstream node when transmitting the built-up topology data downstream.

A bearer-processing node 406 is connected to one or more peer nodes, and exchanges bearer data with them, via terminations. Each node 406 in the session is connected to at least one other node 406. The simplest topology is a case with a single bearer-processing node 406 connected to the data collection agent 402. For the purpose of developing a systematic formulation to describe a topology, the specific pieces of information required to define a given node are:
- The node ID, i.e., a label used to identify a specific node.
- Knowledge of the peer nodes, participating in performance data collection, to which the given node is connected.
- The number of terminations defined for the node. Note that each of these terminations may or may not be connected to a peer node that participates in performance data collection.
- IDs or labels for the terminations.

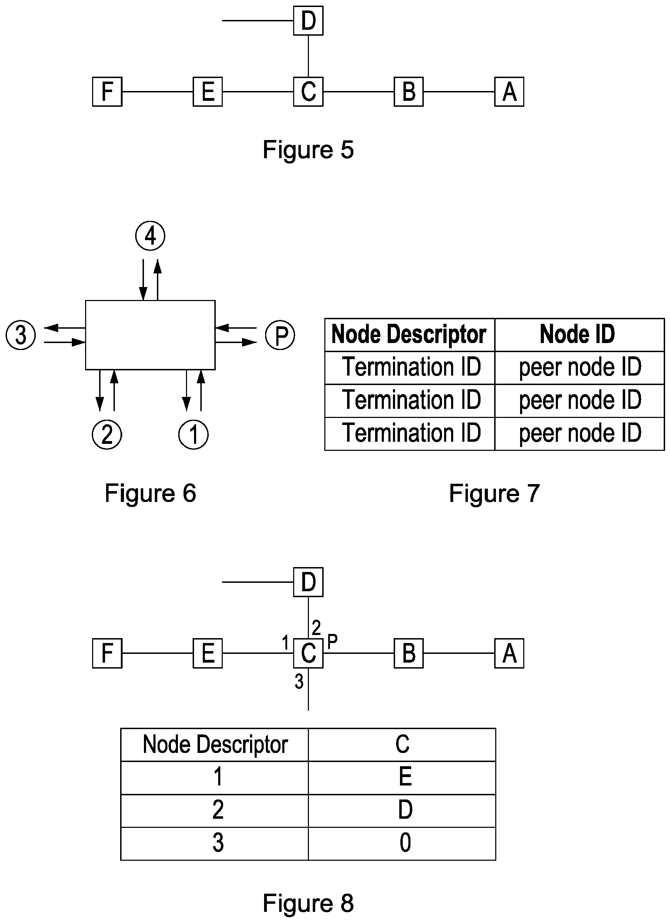

Figure 5 depicts a session in which five bearer-processing nodes 406, nodes B, C, D, E, and F, are connected to a data collection agent 402, node A. In this figure, nodes A, D and F are each connected to a single peer node involved in the performance data collection activity, nodes B and E are each connected to two such peer nodes, and node C is connected to three such peer nodes. It is also observed that nodes A and F each have one set of terminations, nodes B, D, and E have two terminations each, and node C has three terminations. Figure 5 shows an incomplete topology (node D has a connection with no determined endpoint). This illustrates a situation in which there may not be sufficient information to derive the full bearer topology. The techniques described herein can be applied, nevertheless.

To facilitate the identification of the terminations of a node, a numbering scheme can be applied as shown in Figure 6. The termination that connects the node (directly or indirectly through other downstream in-path nodes) to the data collection agent 402 is called the "primary" termination. In Figure 6, the primary termination is identified with the letter "P." The primary termination for any given node is identified as the termination to the peer node that initiated, with the given node, the negotiation for bearer performance monitoring. The other terminations of the node will be numbered in the sequence in which they are created over time. In Figure 6, terminations numbered 1, 2, 3, and 4 are illustrated.

It should be noted that for as long as a termination exists, the number assigned to it remains the same. Furthermore, if a termination is removed, its number should remain reserved and will not be assigned to any other termination. This is necessary to avoid confusion and to allow stability of the termination labels for downstream bearer-processing nodes, and ultimately, for the data collection agent 402. Topology information and performance metrics computed for each termination in a node 406, or arriving from other nodes, are accumulated and transmitted towards the DCA 402 through the primary termination of each node.

Since, as stated above, the topology information has to be built up as the information passes through the in-path bearer-processing nodes 406 towards the data collection agent 402, it is useful to define a descriptor block for a single node. An example descriptor block is shown in Figure 7, for the example of a node with four terminations. The fields in this example are defined as follows:
- "Node Descriptor" is a constant, preferably defined as a unique (unmistakable) value, and is used as a marker to identify the start of a node descriptor block.
- Node ID is a label for identification of a particular node, assigned by the node itself.

In selecting a node ID, a node should attempt to base the selection on a mechanism that minimizes the probability of overlap with IDs from other nodes. This could be achieved, for example, through the use of a random component in the Node ID.
- The Node ID is followed by a set of entries, one for each of the terminations other than the primary termination.
- Each of the terminations is identified through the "Termination ID" fields, as numbered by the node. For each termination there is an entry to identify the Node ID corresponding to a peer node that delivers performance data through this particular termination. If the termination is not attached to such a node, the entry is Null.
- The concatenation of the Node ID and the Termination ID is the unique identifier of a termination in the session topology. It is used in the encapsulation of the performance data, to uniquely associate data with the specific termination of a specific node.

Figure 8 illustrates a session topology where node A is the data collection agent 402. A Node Descriptor block for node C is shown, as an example. In this example, termination 2 on node C is identified by concatenating the node ID (C), with the termination ID (2), to get an identifier "C2."

Descriptor blocks such as those described above are transmitted by each participating bearer-processing node 406, along with the performance data and metrics, to the next downstream peer node. The downstream node generates its own node descriptor block and stacks it on top of the blocks it has received from the upstream node(s). In doing so, the node scans the received node descriptor blocks to determine whether its Node ID happens to have been used in the received data. If so, the node in some embodiments may continue to use its current Node ID, but will revise the overlapping Node ID(s) in the received data blocks to a new (unused) ID. Once a node defines a new ID to replace the overlapping Node ID that it found in a received data block, the same ID will be used henceforth to replace the overlapping ID in future epochs; the node will have to maintain a translation table for this purpose, as long as the overlap exists.

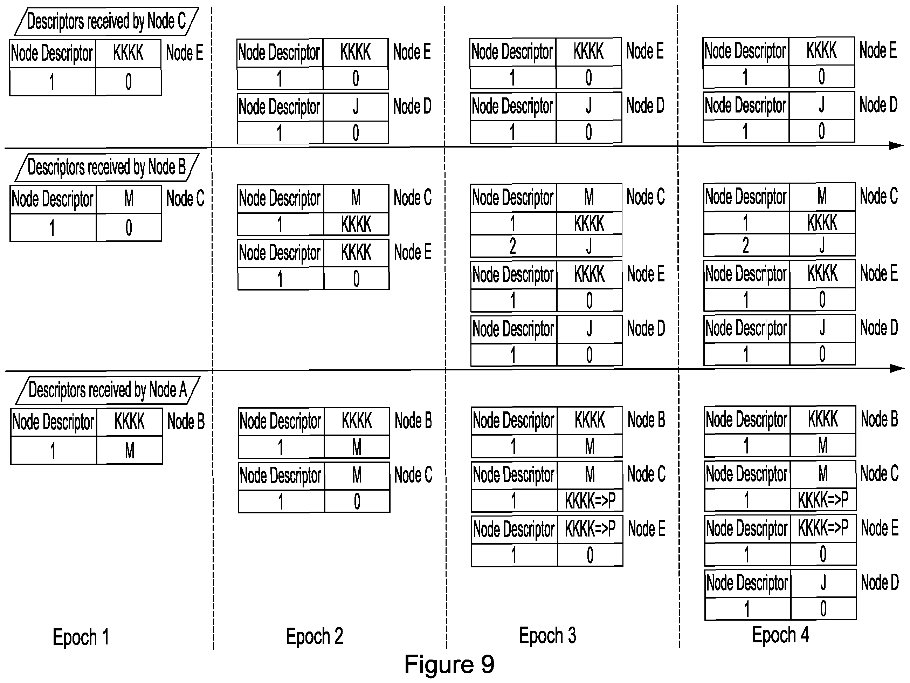

Figure 9 shows an example of the translation of a Node ID, due to overlap. The figure shows the flow of topology data for nodes A, B, and C, where these nodes are connected as shown in Figure 8, over consecutive time epochs. As shown in Figure 8, node C receives data (topology and performance metrics) from nodes D and E. It augments them with its own data and relays the combined data packet to node B. Node B augments the data that it receives with its own data, and passes the combined data packet to node A. Figure 8 shows the flow of data in four time intervals, or epochs. As shown in the figure, in the first epoch, nodes C, B, and A receive data from nodes E, C, and B, respectively. In the second epoch, C receives data from node D in addition to data from node E. In each epoch, each node passes on its own data in addition to data it received from upstream nodes in the previous epoch.

Figure 9 also shows that nodes E and B happen to select the same Node ID (KKKK). This overlap is detected by node B in epoch 2, when it receives the data relayed from node E for the first time. Accordingly, node B replaces all references to the node E node ID with a new one (P). This results in node A receiving information of node E with the Node ID P, rather than KKKK.

Performance metrics can be encapsulated a number of ways. One way is for each node to simply concatenate its own performance metrics with the performance metrics it receives from an upstream peer node or nodes, using the node descriptor block as a delimiter. Other manners of encapsulation are possible, of course. The key to any approach is that it allows the DCA 402 to decode the information and attribute it correctly to the different segments of the topology. The encapsulation technique may also provide additional data that may provide useful insight.

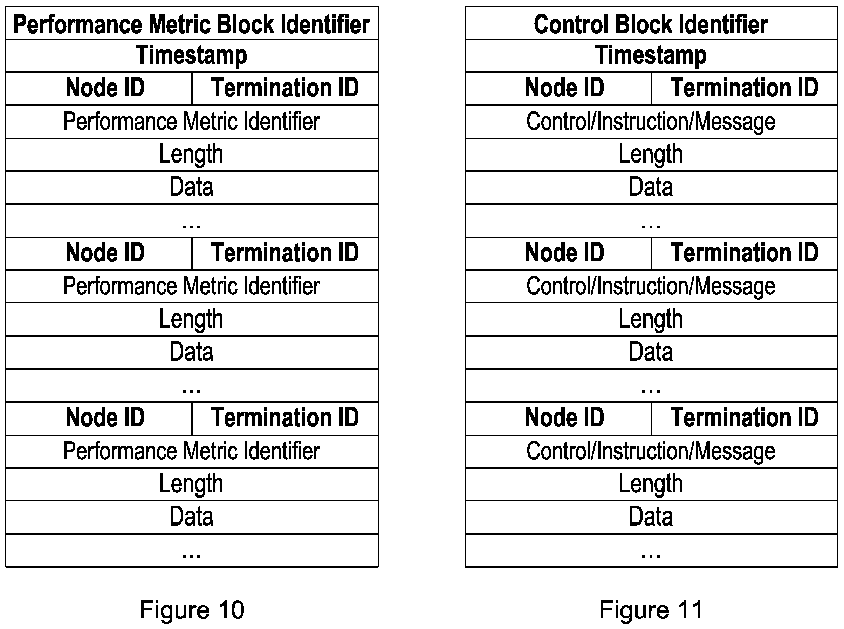

Figure 10 provides an example of a data block that encapsulates performance metrics. Significant aspects of the illustrated data block include the following:
- The "Performance Metric Block Identifier" is a constant, preferably defined as a unique (unmistakeable) value, and used as a marker to identify the start of a performance metric data block. It is preferable to use each encapsulation to contain the metrics from a particular node. Several blocks can be concatenated to relay data from different nodes.
- The "Timestamp" represents the time of the issue of the data according to the clock of the node whose performance metric is encapsulated in a performance metric data block.
- The Node ID and the Termination ID combine to specify the particular termination to which the subsequent data belongs. If the Termination ID is null, then the subsequent data pertains to the node itself, rather than any of its terminations. Examples of such data include the CPU load, the network bandwidth utilization of a node, and specific alarms or notifications.
- The "Performance Metric Identifier" field is a pre-defined value, used to identify the type of data that follows. Examples include jitter, packet loss, signal level, vocoder type and/or mode (encoded along with the corresponding direction, in some embodiments), information related to virtualized network functions, etc. The information related to virtualized network functions may include VNF types, vendor name, release version information, NFVI location, NFVI identification, etc. Other examples of information contained in the "Performance Metric Identifier" field include delay estimates and node identification data, such as IP port address, physical location, type of platform, type of function, manufacturer, etc.
- It should be noted that any given metric could either be pre-defined according to a standard, or proprietary to a given vendor. For a given node, all such fields can be concatenated together, as shown in Figure 10.
- The "Length" field identifies the length of the subsequent data field.
- The "Data" field contains the performance metrics or other useful information. The format of the data could be defined according to industry standards, or remain proprietary to a given equipment vendor. For example, information related to the infrastructure supporting a virtualized network function can be put in the "Data" field. Such information may include migration indication, to flag the occurrence of a migration event, for example.

It should be noted that in addition to performance metrics, other useful information can also be sent by each node and relayed to the DCA 402. One example of such data is a catalog of the metrics that can be produced and transmitted by a node and/or a node termination.

The immediately preceding discussion was focused on the collection or obtention of performance metrics and the relaying of the performance metric data towards the data collection agent 402. The DCA 402 can also send instructions or requests to control the information that it requires from each and every node in the session topology. For example, it can request a catalog of available metrics from all (or specific) nodes, or issue messages to specify the particular type of data it would like to receive from a given node, or a given node termination. When appropriate, a message sent from the DCA 402 could also carry security-related information such as passwords or encryption parameters and/or keys. Individual nodes and their terminations are addressed using the node and termination IDs that are embedded in the topology information. The topology information which, as described above, is composed of the descriptor blocks, delivers to the data collection agent 402 a description of the topology along with unique labels for each of the nodes and terminations. The collection agent 402 can then address a request and/or instructions to particular nodes and/or node terminations in the topology using those same labels, and send them towards the destination through all of the in-path bearer-processing nodes 406. Each in-path bearer-processing node 406 removes the message layer addressed to itself, in some embodiments, and transmit the remainder towards the node(s) from which it receives performance data. The portion of the message addressed to nodes that are no longer connected to an in-path node are dropped. As discussed in further detail below, a bearer-processing node that has provided an alternate node ID for an upstream node should substitute the upstream node's actual/original node ID in such messages before passing the messages upstream.

Figure 11 depicts an example of a control block that encapsulates several control messages. Following are descriptions of the parameters used in the illustrated example:
- The "Control Block Identifier" is a constant, preferably defined as a unique (unmistakeable) value, and used as a marker to identify the start of a Control/Instruction/Message data block.
- The timestamp reflects the time of the issue of the block, based on the DCA clock.
- The Node ID and Termination ID fields are used for unique identification of the specific node termination to which a given instruction or message is addressed. If the Termination ID is null, the instruction is meant for the identified node rather than any of its terminations. If the Node ID is null, then the message is to be distributed to all the nodes in the session topology.
- The "Control/Instruction/Message" field is a pre-defined and unique constant used to specify the particular instruction transmitted by the DCA 402. The set of constants can be defined as a standard, or remain proprietary to a given equipment vendor.
- The "Length" field specifies the length of the subsequent data segment.
- The data field contains any data, if necessary, related to the command, instruction or the message transmitted by the DCA 402.

As noted above, the IDs/labels seen by the data collection agent 402 may have been altered by an in-path node, in order to ensure uniqueness of the labels. The DCA 402 is generally unaware of this alteration. Accordingly, DCA 402 messages/requests that start out with an "altered" node ID must be translated back to the original label once the request arrives at the in-path node that altered the ID, using the translation table that was generated to keep track of node ID translations.

As described above, the nodes 406 in the data path of a given session combine their own performance metrics with those received from upstream nodes, and transmit the resulting data on their primary termination towards the DCA 402. In specific cases where an upstream node may not support the set of protocols defined here, it is still possible for a compliant node to relay performance metrics of a non-compliant peering node. For example, a Media Gateway compliant with the protocols defined here, which may be peering with a LTE terminal/device that does not support the protocols, could still bundle up and relay performance metrics that the LTE terminal/device reports using the standardized RTCP protocol.

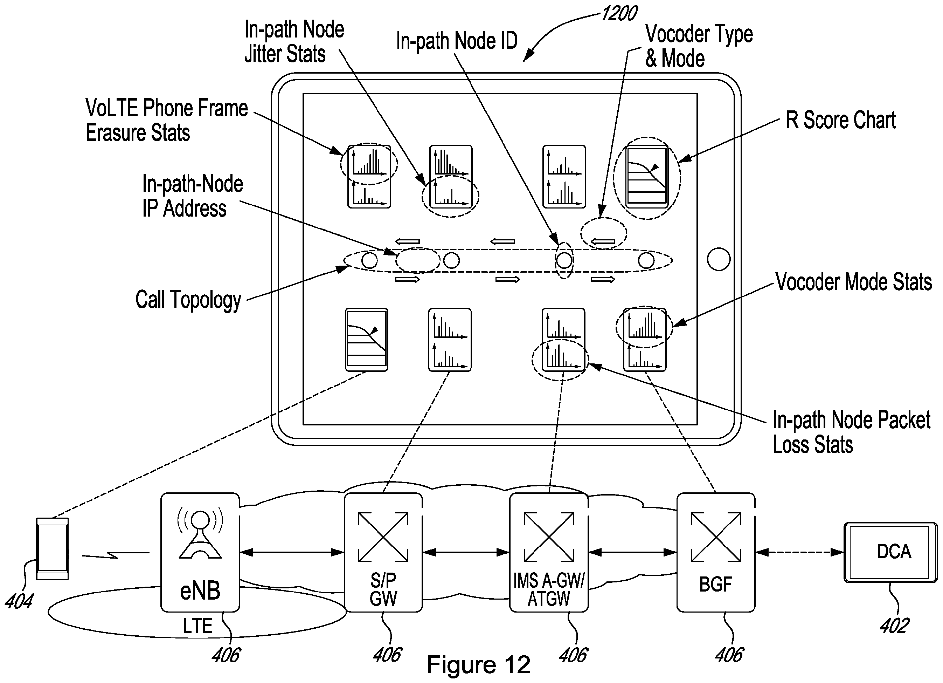

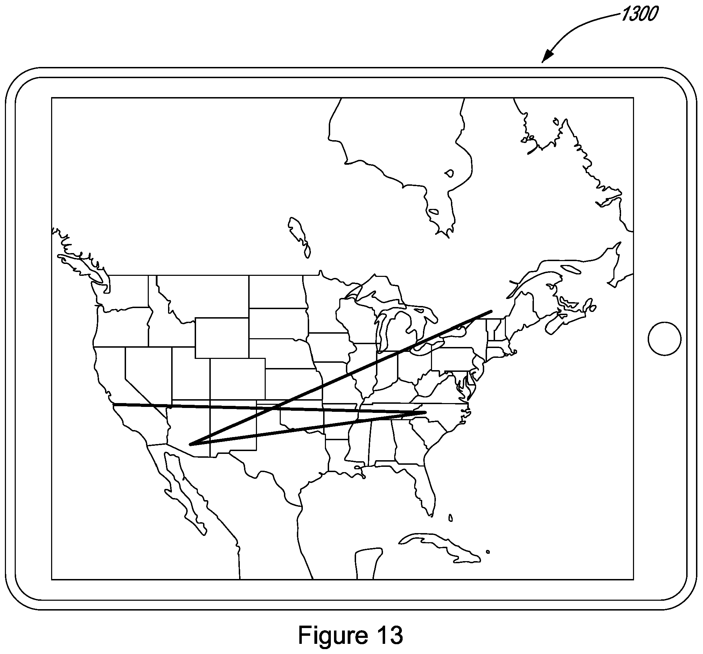

The Data Collection Agent (DCA) 402 collects the performance metrics relayed from upstream bearer-processing nodes, and provides the user interface to the bearer-performance monitoring system. The task of monitoring may include some or all of the following aspects, in various embodiments:
- Collecting the data arriving from upstream nodes to be processed on-line for immediate display, or stored for subsequent off-line analysis and viewing.
- Interpretation of the topology information to reconstitute the session topology.
- Analysis of the raw data to produce meaningful plots and representations.
- Analysis of the information related to the infrastructure. For example, the DCA 402 can display the migration event information to facilitate troubleshooting a perceived degradation of the quality of the bearer.
- Display of the processed data in the form of the call topology, along with some or all of the processed information, with the display of the processed information suitably positioned to permit visual association of performance metric representations with the originating nodes and terminations. Also, display of information to indicate that a network node is a virtualized network function can be provided, along with information related to the infrastructure supporting the VNF, such as CPU utilization, etc. Figure 12, discussed in further detail below, provides an example of such a display.
- Analysis of timestamps delivered by the nodes in the topology, to estimate timing relationship between the nodes' clocks.
- Mapping of nodes on geographic maps based on the identification of the nodes, and how they are connected to form the call path, as shown in Figure 13.

In some embodiments, the DCA 402 also allows the control of the analysis/monitoring session as described below:
- Control of the particular form of data representation, such as histograms versus temporal diagrams.
- Transmission of control messages to all or specific nodes within the topology to customize the parameters of the data collection, such as the selection of the type of performance metrics to be transmitted by each node, the rate of update of the selected data, etc.
- Exercise of access control, e.g., using passwords, encryption keys, etc., in cases where nodes in the session topology may require it.
- The selection of on-line vs. off-line analysis, and the selection of particular session records in the case of off-line analysis.

The DCA 402 implementation can also support a web interface from which the collected data can be displayed in a user-friendly and device-independent manner. This web interface may consist of a web server application and an HTML web client interface, in some embodiments. The web server application accepts parameters from the web client interface specifying, for example, user access credentials, the data that should be presented, the manner that the data is to be displayed, and the time period of interest. In the case of off-line analysis, the data is then retrieved from the DCA 402 data store, analyzed, formatted, and sent to the web client interface for display. The web server application may be implemented with any number of technologies, such as a Java servlet, and executes on a web server accessible to authorized users. The web client interface may be an HTML web page that any compliant web browser may access from a web server. It presents an access point to an authorized user, accepts specifications from the user, sends the appropriate parameters to the web server application, receives data from the web server application, and displays the data in a meaningful manner.

The design of the display format for the DCA should provide for the presentation of captured information in a comprehensive, yet intuitive manner and in a compact form, to facilitate quick understanding by the viewer. An example of such a format is shown in Figure 12. This example format provides a visual representation 1200 of the session topology, in terms of the nodes that are in the path of the bearer signal. The type and identification of each node are reflected on the node's visual representation. IP addresses and port numbers are also shown on the nodes, at points corresponding to their respective terminations. Furthermore, the representation can show that a particular node is a virtualized network function.

In various embodiments, for each link connecting the nodes, any or all of the following information is displayed:
- The format of the data (e.g. the applicable vocoder, and vocoder mode or bitrate) in each applicable direction. Several options may be considered for the display of this type of data. For instance, the display can show the data corresponding to the stream entering a node, or the display can show the data corresponding to the stream exiting a node. Alternatively, both can be displayed, especially if analysis of data reveals a discrepancy between the data format transmitted by one node and that received by the corresponding peer nodes.
- The data is underlined by an arrow for the purpose of linking the data format to the particular flow direction. The arrows pointing in the same direction (but between successive nodes) are displayed in alignment, to present a logically continuous flow that is clearer and less cluttered. Arrows along the same logical flow can be displayed in the same color. Arrows signifying flows in different directions can be displayed in different colors.
- Format data associated with the arrows are preferably displayed in the same color as their respective arrows.

For each node, selected statistics are plotted for each port of data entry, such that:
- For each port of entry, the selected statistics are displayed together, so that there is a clear distinction between the different ports.
- For each port of entry, the selected statistics are on the same side of the node as the corresponding flow-direction arrow.
- Data plots are preferably displayed in the same color (or color theme) as their corresponding arrows.

The display may start with a default set of performance metric plots or a set negotiated through SIP negotiation and SDP exchange, if such metrics are provided by the nodes in the call path. However, the displayed metrics are intended to be easily switched as necessary, through means such as drop-down menus in the area of the plots, or on the appropriate side of the displayed node.

In some embodiments, the DCA 402 may also provide for a view in which the nodes in the data session topology are illustrated with respect to their geographical positions. Information about the geographic locations of the nodes may be determined from location information sent by each node along with performance metrics data, and/or from a pre-stored lookup table indexed by node identifiers, for example. Figure 13 illustrates an example view 1300 of this approach, in this figure, the bearer-processing node path is superimposed on a map of North America. It can be seen that in this example, the data session path is revealed to be sub-optimal, as it needlessly traverses the continent multiple times, rather than proceeding between the end-points in a straight or nearly straight line. It should be noted that if a bearer-processing node is a virtualized network function, the location of the NFVI infrastructure that hosts the VNF will be shown on the map.

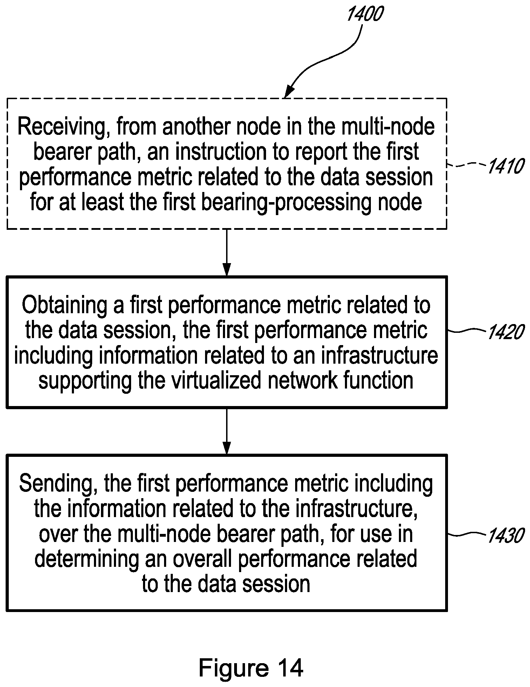

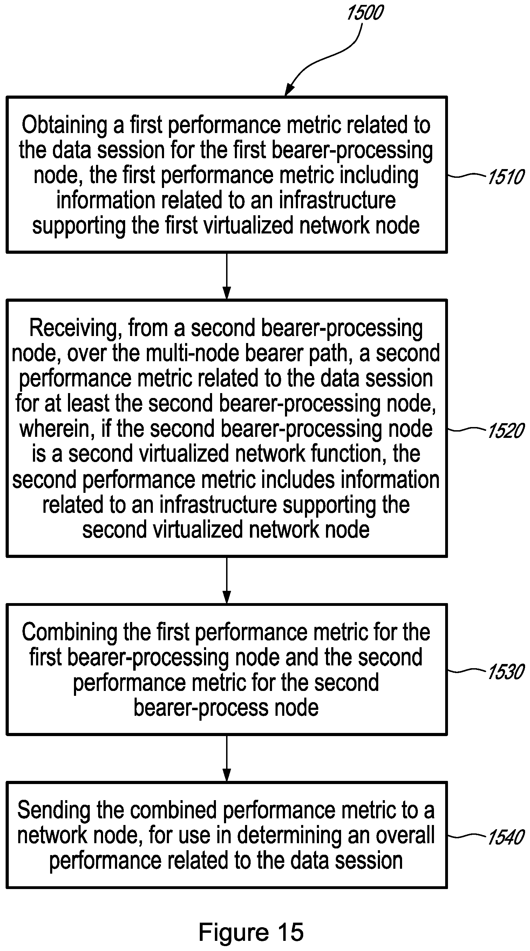

In view of the detailed description above of the various techniques for accumulating and evaluating performance metrics in a data session carried out through a multi-node bearer path, it will be appreciated that Figures 14 and 15 are process flow diagrams illustrating generalized methods according to some of these techniques.

More specifically, Figure 14 illustrates a method 1400 suitable for implementation in a first bearer-processing node in a multi-node bearer path in a data session, for monitoring an overall performance related to the data session, wherein at least the first node is a virtualized network function. (Note that "first" is used here simply to distinguish this bearer-processing node from other nodes in the path, and is not intended to suggest that this node must be the "first" node in any given ordered list of the nodes.)

Method 1400 begins, at block 1420, with obtaining a first performance metric related to the data session, the first performance metric including information related to an infrastructure supporting the virtualized network function. Examples of information related to the infrastructure have been provided above. In some embodiments, obtaining includes collecting, determining, calculating, requesting and receiving, etc., the first performance metric.

The obtaining of the first performance metric can optionally be triggered responsive to receiving, from another node in the multi-node bearer path, an instruction to report the first performance metric related to the data session for at least the first bearer-processing node, as shown at block 1410. For example, the DCA 402 can send the instruction to report the first performance metric, on a regular basis, i.e. for each time interval, or based on events. Also, the instruction to report can be sent from the DCA 402 to the first bearer-processing node, in a first direction, e.g. upstream direction. Optionally or alternatively, in some embodiments, the first bearer-processing node may be preconfigured, e.g., with default settings or with settings negotiated during call set-up (e.g., via SIP), to obtain and send the performance metrics, or to obtain, and send the performance metrics under certain circumstances, without the need of receiving an instruction to report.

As shown at block 1430, the first bearer-processing node sends the first performance metric including the information related to the infrastructure, over the multi-node bearer path, for use in determining the overall performance related to the data session. For example, the obtained (or first) performance metric is sent to the DCA 402 from the first bearer-processing node, in a second direction, e.g. downstream direction. Also, the first bearer-processing node obtains the first performance metric for each of one or more time intervals or for each one of more events. It should be noted that the first bearer-processing node can obtain a plurality (or one or more) of first performance metrics.

In some embodiments, once the first bearer-processing node receives the instruction to report, it can send/forward an instruction to report a second performance metric related to the data session to a second bearer-processing node, over the multi-node bearer path. The instruction may also indicate to send the collected or obtained (or second) performance metric back to the first bearer-processing node.

In response to receiving the instruction to report, the second bearer-processing node obtains the second performance metric and if the second bearer-processing node is a virtualized network function, the second performance metric includes information related to an infrastructure supporting the virtualized network function. The obtained (or second) performance metric from the second bearer-processing node is sent to the first bearer-processing node over the multi-node bearer path.

After receiving the second performance metric from the second bearer-processing node, the first bearer-processing node adds its own performance metric(s) and then relays both (first and second) performance metrics over the multi-node bearer path to the DAC 402, for example. The first performance metric for the first processing node and the second performance metric for the second processing node are distinguished from one another by using node identifier labels corresponding to the first and second bearer bearer-processing nodes, respectively.

In some other embodiments, method 1400 can also comprise the step of determining that the second bearer-processing node is a virtualized network function. To do so, the second bearer-processing node may have an application mode, which indicates the mode in which the application is running, either in a virtualized environment or in a legacy environment. It will be appreciated by a skilled person in the art that other methods can be used to determine that a bearer-processing node is a virtualized network function.

Upon determining that the second bearer-processing node is a virtualized network function, the VNF sends, to the NFVI 16, a request for the information related to the infrastructure, via the reference point Vn-Nf 42. The VNF then receives the information via the same reference point. Also, the first bearer-processing node (or VNF) could be configured to periodically access the information related to the infrastructure supporting the virtualized network function, so that it does not need receive any requests.

A method 1500, as illustrated in Figure 15, according to some of other embodiments will be described. Method 1500 can be carried out in a first bearer-processing node in a multi-node bearer path for a data session, wherein at least the first node in the multi-node bearer path is a virtualized network function.

More specifically, method 1500 may comprise steps of:
as illustrated at block 1510, obtaining a first performance metric related to the data session for the first bearer-processing node, the first performance metric including information related to an infrastructure supporting the first virtualized network node;
as illustrated at block 1520, receiving, from a second bearer-processing node, over the multi-node bearer path, a second performance metric related to the data session for at least the second bearer-processing node, wherein, if the second bearer processing node is a second virtualized network function, the second performance metric includes information related to an infrastructure supporting the second virtualized network node;
as illustrated at block 1530, combining the first performance metric for the first bearer-processing node and the second performance metric for the second bearer-process node; and
as illustrated at block 1540, sending the combined performance metrics to a network node, for use in determining an overall performance related to the data session.

The same range and types for the performance metrics and the information related to the infrastructure discussed above are applicable to this example, as are the techniques discussed above for labeling performance metrics for the first and second bearer-processing nodes.

The obtaining of the first performance metric for the first bearer-processing node is done for each of one or more intervals or events during the data session, as well as the receipt of the performance metrics from the second bearer-processing node. Also, the obtaining of the first performance metric is responsive to receiving an instruction to report the first performance metric. The instruction is received in a first direction, e.g. direction 410 in Figure 4. The combined performance metrics is sent to the network node, such as the DCA 402, in a second direction, e.g. 408 in Figure 4.

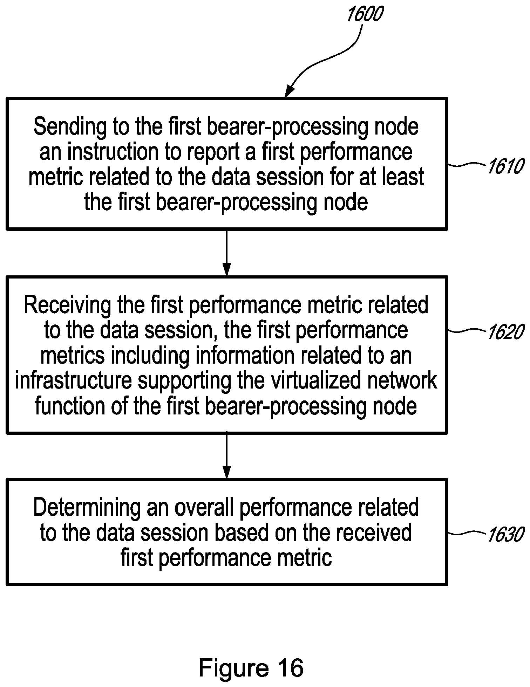

Figure 16 illustrates another example method 1600 that is suitable for implementation in a data-collecting node operable to communicate with a first bearer-processing node in a multi-node bearer path for a data session. This data-collecting node is also a bearer-processing node, in some embodiments. In some other embodiments, the data-collecting node is a server node distinct from any bearer-processing nodes in the multi-node bearer path, and the first bearer-processing node is an endpoint in the bearer path. For example, the data-collecting node is the DCA 402 of Figure 4.

Method 1600 starts with, as shown at block 1610, sending to the first bearer-processing node an instruction to report a first performance metric related to the data session for at least the first bearer-processing node, which is a virtualized network function. For example, the instruction may indicate to report the first performance metric for each of one or more intervals or events during the data session.

As shown at block 1620, the data collecting node receives the first performance metric related to the data session, the first performance metric including information related to an infrastructure supporting the virtualized network function of the first bearer-processing node.

As shown at block 1630, the data collecting node determines an overall performance related to the data session based on the received first performance metric.

In some embodiments, method 1600 further comprises receiving, from the first bearer-processing node, a second performance metric related to the data session for a second bearer-processing node, for each one of one or more intervals or events during the data session, for example. If the second bearer-processing node is a virtualized network function, the second performance metric related to the data session for the second bearer-processing node includes information related to the infrastructure supporting the virtualized network function of the second bearer-processing node.

In some of these embodiments, the first performance metric for the first bearer-processing node and the second performance metric for the second bearer-processing node are received together, for each of the one or more intervals or events, and are distinguished from one another by node identifier labels corresponding to the first and second bearer-processing nodes, respectively. In some embodiments, method 1600 further comprises determining a bearer-path topology for the data session, based on node identifier labels and termination labels, included with the received performance metrics, for at least the first and second bearer-processing nodes. The method 1600 may further comprise generating a representation of the determined bearer-path topology for display, the representation including depictions of each bearer-processing node in the determined bearer-path topology and representations of one or more of the performance metrics for at least the first and second bearer-processing nodes. In some other embodiments, the method 1600 includes updating the representation of the determined bearer-path topology, in response to receiving updated topology information and/or performance metrics for one or more bearer-processing nodes in the bearer path. The method 1600 further includes determining a geographic location for each of two or more bearer-processing nodes in the determined bearer-path topology, wherein generating the representation of the determined bearer-path topology for display comprises overlaying the depictions of each bearer-processing node in the determined bearer-path topology, together with how they are interconnected, on a depiction of a map, based on the determined geographic locations.

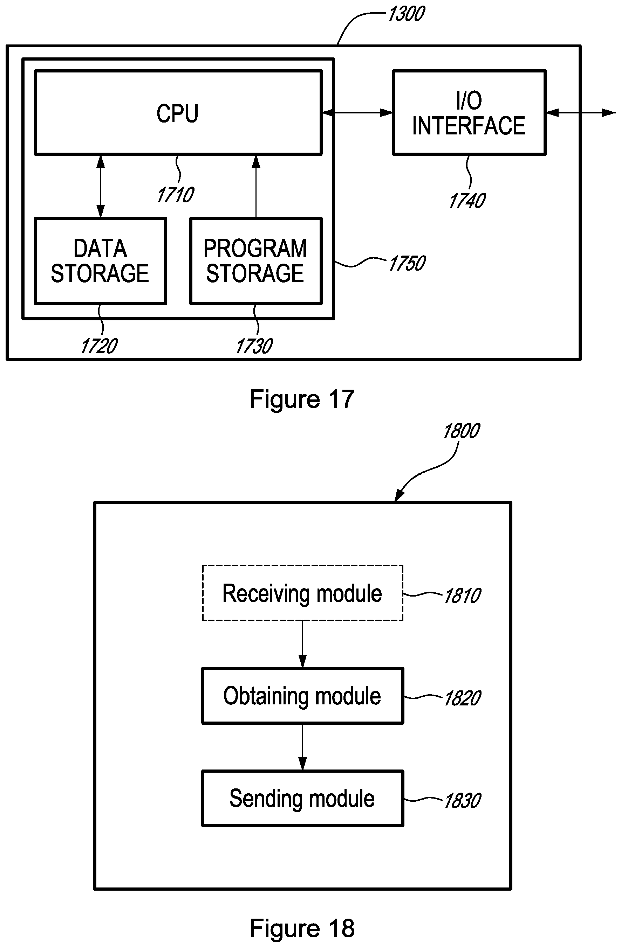

Figure 17 is a schematic illustration of a node 1700 in which a method embodying any of methods 1400, 1500 and 1600 can be implemented. If a bearer-processing node is a virtualized network function, the node 1700 may refer to the infrastructure supporting the virtualized network function.

A computer program for controlling the node 1700 to carry out a method embodying any of methods 1400, 1500 and 1600 is stored in a program storage 1730, which comprises one or several memory devices. Data used during the performance of any of the methods 1400, 1500 and 1600 is stored in a data storage 1720, which also comprises one or more memory devices, one or more of which may be the same as those used for program storage 130, in some embodiments. During performance of any of the methods 1400, 1500 and 1600, program steps are fetched from the program storage 1730 and executed by a Central Processing Unit (CPU) 1710, retrieving data as required from the data storage 1720. Output information resulting from performance of any of these methods can be stored back in the data storage 1720, or sent to an Input/Output (I/O) interface 1740, which includes a network interface circuit for sending and receiving data to and from other network nodes. The I/O 1740 may also include a radio transceiver for communicating with one or more terminals, in some embodiments. The CPU 1710 and its associated data storage 1720 and program storage 1730 may collectively be referred to as a processing circuit 1750. It will be appreciated that variations of this processing circuit 1750 are possible, including circuits, one or more of various types of programmable circuit elements, e.g., microprocessors, microcontrollers, digital signal processors, field-programmable application-specific integrated circuits, and the like.

Accordingly, in various embodiments of the invention, processing circuits, such as the CPU 1710, data storage 1720, and program storage 1730 in Figure 17, are configured to carry out one or more of the techniques described in detail above. For example, a computer program product comprising computer readable memory storing instructions thereon, that, when executed by a network node cause the network node to carry method 1400, is provided.

It should be appreciated that the processing circuit 1750, when configured with appropriate program code, may be understood to comprise several functional "modules," where each module comprises program code for carrying out the corresponding function, when executed by an appropriate processor.

Thus, for example, Figure 18 illustrates a network node 1800 adapted to carry out method 1400 as illustrated in Figure 14, or variants thereof, may be understood to comprise an obtaining module 1820 and a sending module 1830, and optionally a receiving module 1810.

The optional receiving module 1810 is configured to receive an instruction to report a first performance metric related to the data session for at least a first bearer-processing node.

The obtaining module 1820 is configured to obtain the first performance metrics, the first performance metric including information related to an infrastructure supporting the virtualized network function.

The sending module 1830 is configured to send the first performance metric that include the information related to the infrastructure over the multi-node bearer path, for use in determining a performance related to the data session.

Similarly, a network node 1900 configured to carry out the method 1500 of Figure 15, or variants thereof, may be understood to comprise: an obtaining module 1910, a receiving module 1920, a combining module 1930 and a sending module 1940.

The obtaining module 1910 is configured to obtain a first performance metric related to the data session for the first bearer-processing node, the first performance metric including information related to an infrastructure supporting the first virtualized network node.

The receiving module 1920 is configured to receive, from a second bearer-processing node, over the multi-node bearer path, a second performance metric related to the data session for at least the second bearer-processing node, wherein, if the second bearer processing node is a second virtualized network function, the second performance metric includes information related to an infrastructure supporting the second virtualized network node.

The combining module 1930 is configured to combine the first performance metric for the first bearer-processing node and the second performance metric for the second bearer-process node.

The sending module 1940 is configured to send the combined performance metrics to a network node, for use in determining an overall performance related to the data session.

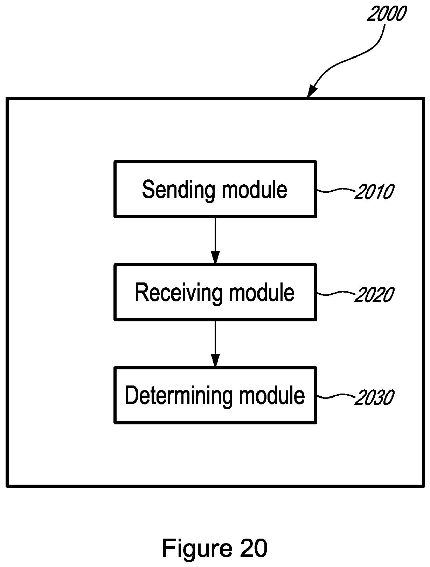

Figure 20 illustrates a network node 2000, according to another embodiment of the invention, for carrying out method 1600, for example. The network node 2000 comprises a sending module 2010, a receiving module 2020 and a determining module 2030.

The sending module 2010 is configured to send to the first bearer-processing node an instruction to report a first performance metric related to the data session for at least the first bearer-processing node.

The receiving module 2020 is configured to receive the first performance metrics related to the data session, the first performance metric including information related to an infrastructure supporting the virtualized network function of the first bearer-processing node.

The determining module 2030 is configured to monitor an overall performance related to the data session, based on the received first performance metric.

In the present description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are openended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments have been described herein, with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) running on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the appended examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure, and shall not be restricted or limited by the foregoing detailed description.

## Claims

1. A method in a data-collecting node operable to communicate with a first bearer-processing node in a multi-node bearer path for a data session, wherein at least the first bearer-processing node is a virtualized network function, VNF, the method comprising:
sending (1610) to the first bearer-processing node, an instruction to report a first performance metric related to the data session for at least the first bearer-processing node;
receiving (1620) the first performance metric for at least the first bearer-processing node, the first performance metric including information related to an infrastructure supporting the VNF of the first bearer-processing node;
receiving from the first bearer-processing node, a second performance metric related to the data session, for a second bearer-processing node, for each of one or more intervals or events during the data session, wherein the second bearer-processing node is a VNF and the second performance metric received from the second bearer-processing node includes information related to an infrastructure supporting the VNF of the second bearer-processing node; and
determining (1630) an overall performance related to the data session based on the received first performance metric and the received second performance metric wherein the information related to an infrastructure supporting the VNF comprises one or more of:
identification of a type of a processor on which the VNF is running;
a clock frequency of the processor;
a cache characteristics of the processor;
a number of processor cores made available for the VNF to use;
a total physical network bandwidth available for use by a compute resource of the infrastructure;
a percentage of total used central processing unit (CPU);
a percentage of total used network bandwidth;
a total storage space available for use by a compute resource of the infrastructure;
a percentage of the total used storage space;
a number of virtual machines sharing same compute resources;
a geographic location of hardware infrastructure serving the VNF;
a total number of tenants that the infrastructure is serving; and
an elapsed time since an instantiation of the VNF on the processor.

2. The method of claim 1, wherein the first performance metric for the first bearer-processing node and the second performance metric for the second bearer-processing node are received together, for each of the one or more intervals or events, and are distinguished from one another by node identifier labels corresponding to the first and second bearer-processing nodes, respectively.

3. The method of claim 1 or 2, further comprising determining a bearer-path topology for the data session, based on node identifier labels and termination labels, included with the received first and second performance metrics, for at least the first and second bearer-processing nodes.

4. The method of claim 3, further comprising generating a representation of the determined bearer-path topology for display, the representation including depictions of each bearer-processing node in the determined bearer-path topology and further including representations of at least the first and second performance metrics for at least the first and second bearer-processing nodes.

5. The method of claim 4, further comprising updating the representation of the determined bearer-path topology, in response to receiving updated bearer-path topology information for one or more bearer-processing nodes in the multi-node bearer path.

6. The method of claim 4, further comprising determining a geographic location for each of two or more bearer-processing nodes in the determined multi-node bearer-path topology, wherein generating the representation of the determined bearer-path topology for display comprises overlaying the depictions of each bearer-processing node in the determined bearer-path topology and connections between the bearer-processing nodes on a depiction of a map, based on the determined geographic locations.

7. A data-collecting node operable to communicate with a first bearer-processing node in a multi-node bearer path for a data session, wherein the first bearer-processing node is a virtualized network function, VNF, the data-collecting node configured to:
send to the first bearer-processing node, an instruction to report a first performance metric related to the data session for at least the first bearer-processing node;
receive the first performance metric for at least the first bearer-processing node, the first performance metric including information related to an infrastructure supporting the VNF of the first bearer-processing node;
receive from the first bearer-processing node, a second performance metric related to the data session for a second bearer-processing node, for each of one or more intervals or events during the data session, wherein the second bearer-processing node is a VNF and the second performance metric received from the second bearer-processing node includes information related to an infrastructure supporting the VNF of the second bearer-processing node; and
determine an overall performance related to the data session based on the received first performance metric and the received second performance metric, wherein the information related to an infrastructure supporting the VNF comprises one or more of:
identification of a type of a processor on which the VNF is running;
a clock frequency of the processor;
a cache characteristics of the processor;
a number of processor cores made available for the VNF to use;
a total physical network bandwidth available for use by a compute resource of the infrastructure;
a percentage of total used central processing unit (CPU);
a percentage of total used network bandwidth;
a total storage space available for use by a compute resource of the infrastructure;
a percentage of the total used storage space;
a number of virtual machines sharing same compute resources;
a geographic location of hardware infrastructure serving the VNF;
a total number of tenants that the infrastructure is serving; and
an elapsed time since an instantiation of the VNF on the processor.

8. The data-collecting node of claim 7, wherein the first performance metric for the first bearer-processing node and the second performance metric for the second bearer-processing node are received together, for each of the one or more intervals or events, and are distinguished from one another by node identifier labels corresponding to the first and second bearer-processing nodes, respectively.

9. The data-collecting node of claim 7 or 8, further comprising determining a bearer-path topology for the data session, based on node identifier labels and termination labels, included with the received first and second performance metrics, for at least the first and second bearer-processing nodes.

10. The data-collecting node of claim 9, further comprising generating a representation of the determined bearer-path topology for display, the representation including depictions of each bearer-processing node in the determined bearer-path topology and further including representations of at least the first and second performance metrics for at least the first and second bearer-processing nodes.

11. The data-collecting node of claim 10, further comprising updating the representation of the determined bearer-path topology, in response to receiving updated bearer-path topology information for one or more bearer-processing nodes in the multi-node bearer path.

12. The data-collecting node of claim 10, further comprising determining a geographic location for each of two or more bearer-processing nodes in the determined multi-node bearer-path topology, wherein generating the representation of the determined bearer-path topology for display comprises overlaying the depictions of each bearer-processing node in the determined bearer-path topology and connections between the bearer-processing nodes on a depiction of a map, based on the determined geographic locations.

13. A computer program product comprising computer readable memory storing instructions thereon that, when executed by a network node, cause the network node to carry out a method according to any of claims 1 to 7.

## Patentansprüche

1. Verfahren in einem Datensammelknoten, der betriebsfähig ist, um mit einem ersten Trägerverarbeitungsknoten in einem Mehrknoten-Trägerpfad für eine Datensitzung zu kommunizieren, wobei mindestens der erste Trägerverarbeitungsknoten eine virtualisierte Netzfunktion, VNF, ist, wobei das Verfahren umfasst:
Senden (1610), an den ersten Trägerverarbeitungsknoten, einer Anweisung, eine erste Leistungsmaßzahl bezüglich der Datensitzung für mindestens den ersten Trägerverarbeitungsknoten zu melden;
Empfangen (1620) der ersten Leistungsmaßzahl für mindestens den ersten Trägerverarbeitungsknoten, wobei die erste Leistungsmaßzahl Informationen einschließt, die sich auf eine Infrastruktur beziehen, welche die VNF des ersten Trägerverarbeitungsknotens stützt;
Empfangen, von dem ersten Trägerverarbeitungsknoten, einer zweiten Leistungsmaßzahl bezüglich der Datensitzung, für einen zweiten Trägerverarbeitungsknoten, für jedes von einem oder mehreren Intervallen oder Ereignissen während der Datensitzung, wobei der zweite Trägerverarbeitungsknoten eine VNF ist und die zweite Leistungsmaßzahl, die von dem zweiten Trägerverarbeitungsknoten empfangen wird, Informationen in Bezug auf eine Infrastruktur einschließt, welche die VNF des zweiten Trägerverarbeitungsknotens stützt; und
Bestimmen (1630) einer Gesamtleistung bezüglich der Datensitzung basierend auf der empfangenen ersten Leistungsmaßzahl und der empfangenen zweiten Leistungsmaßzahl, wobei die Informationen in Bezug auf eine Infrastruktur, welche die VNF stützt, eines oder mehrere umfasst von:
Identifizierung eines Prozessortyps, auf dem die VNF läuft;
eine Taktfrequenz des Prozessors;
eine Cache-Charakteristik des Prozessors;
eine Anzahl von Prozessorkernen, die für die VNF zur Verwendung verfügbar gemacht werden;
eine gesamte physische Netzbandbreite, die zur Verwendung durch eine Rechenressource der Infrastruktur verfügbar ist;
einen Prozentsatz der insgesamt verwendeten zentralen Verarbeitungseinheit (CPU);
einen Prozentsatz der insgesamt verwendeten Netzbandbreite;
einen gesamten Speicherplatz, der zur Verwendung durch eine Rechenressource der Infrastruktur verfügbar ist;
einen Prozentsatz des insgesamt verwendeten Speicherplatzes;
eine Anzahl virtueller Maschinen, die dieselben Rechenressourcen gemeinsam nutzen;
einen geographischen Ort der Hardware-Infrastruktur, die das VNF bedient;
eine Gesamtzahl von Teilnehmern, denen die Infrastruktur dient; und
eine vergangene Zeit seit einer Instantiierung der VNF auf dem Prozessor.

2. Verfahren nach Anspruch 1, wobei die erste Leistungsmaßzahl für den ersten Trägerverarbeitungsknoten und die zweite Leistungsmaßzahl für den zweiten Trägerverarbeitungsknoten zusammen für jedes des einen oder der mehreren Intervalle oder Ereignisse empfangen und voneinander durch Knotenkennungsetiketten unterschieden werden, die jeweils dem ersten und dem zweiten Trägerverarbeitungsknoten entsprechen.

3. Verfahren nach Anspruch 1 oder 2, ferner umfassend Bestimmen einer Trägerpfadtopologie für die Datensitzung, basierend auf Knotenkennungsetiketten und Abschlussetiketten, die in der empfangenen ersten und der empfangenen zweiten Leistungsmaßzahl für mindestens den ersten und den zweiten Trägerverarbeitungsknoten eingeschlossen sind.

4. Verfahren nach Anspruch 3, ferner umfassend Erzeugen einer Darstellung der bestimmten Trägerpfadtopologie zur Anzeige, wobei die Darstellung Abbildungen jedes Trägerverarbeitungsknotens in der bestimmten Trägerpfadtopologie einschließt und ferner Darstellungen von mindestens der ersten und der zweiten Leistungsmaßzahl für mindestens den ersten und den zweiten Trägerverarbeitungsknoten einschließt.

5. Verfahren nach Anspruch 4, ferner umfassend Aktualisieren der Darstellung der bestimmten Trägerpfadtopologie als Reaktion auf das Empfangen aktualisierter Trägerpfadtopologieinformationen für einen oder mehrere Trägerverarbeitungsknoten in dem Mehrknoten-Trägerpfad.

6. Verfahren nach Anspruch 4, ferner umfassend Bestimmen eines geografischen Orts für jeden von zwei oder mehr Trägerverarbeitungsknoten in der bestimmten Mehrknoten-Trägerpfadtopologie, wobei Erzeugen der Darstellung der bestimmten Trägerpfadtopologie zur Anzeige Überlagern der Abbildungen jedes Trägerverarbeitungsknotens in der bestimmten Trägerpfadtopologie und Verbindungen zwischen den Trägerverarbeitungsknoten auf einer Abbildung einer Karte basierend auf den bestimmten geografischen Orten umfasst.

7. Datensammelknoten, der betriebsfähig ist, um mit einem ersten Trägerverarbeitungsknoten in einem Mehrknoten-Trägerpfad für eine Datensitzung zu kommunizieren, wobei der erste Trägerverarbeitungsknoten eine virtualisierte Netzfunktion, VNF, ist, wobei der Datensammelknoten konfiguriert ist zum:
Senden, an den ersten Trägerverarbeitungsknoten, einer Anweisung, eine erste Leistungsmaßzahl bezüglich der Datensitzung für mindestens den ersten Trägerverarbeitungsknoten zu melden;
Empfangen der ersten Leistungsmaßzahl für mindestens den ersten Trägerverarbeitungsknoten, wobei die erste Leistungsmaßzahl Informationen einschließt, die sich auf eine Infrastruktur beziehen, welche die VNF des ersten Trägerverarbeitungsknotens stützt;
Empfangen, von dem ersten Trägerverarbeitungsknoten, einer zweiten Leistungsmaßzahl bezüglich der Datensitzung, für einen zweiten Trägerverarbeitungsknoten, für jedes von einem oder mehreren Intervallen oder Ereignissen während der Datensitzung, wobei der zweite Trägerverarbeitungsknoten eine VNF ist und die zweite Leistungsmaßzahl, die von dem zweiten Trägerverarbeitungsknoten empfangen wird, Informationen bezüglich einer Infrastruktur einschließt, welche die VNF des zweiten Trägerverarbeitungsknotens stützt; und
Bestimmen einer Gesamtleistung bezüglich der Datensitzung basierend auf der empfangenen ersten Leistungsmaßzahl und der empfangenen zweiten Leistungsmaßzahl, wobei die Informationen bezüglich einer Infrastruktur, welche die VNF stützt, eines oder mehrere umfassen von:
Identifizierung eines Prozessortyps, auf dem die VNF läuft;
eine Taktfrequenz des Prozessors;
eine Cache-Charakteristik des Prozessors;
eine Anzahl von Prozessorkernen, die für die VNF zur Verwendung verfügbar gemacht werden;
eine gesamte physische Netzbandbreite, die zur Verwendung durch eine Rechenressource der Infrastruktur verfügbar ist;
einen Prozentsatz der insgesamt verwendeten zentralen Verarbeitungseinheit (CPU);
einen Prozentsatz der insgesamt verwendeten Netzbandbreite;
einen gesamten Speicherplatz, der zur Verwendung durch eine Rechenressource der Infrastruktur verfügbar ist;
einen Prozentsatz des insgesamt verwendeten Speicherplatzes;
eine Anzahl virtueller Maschinen, die dieselben Rechenressourcen gemeinsam nutzen;
einen geographischen Ort der Hardware-Infrastruktur, die das VNF bedient;
eine Gesamtzahl von Teilnehmern, denen die Infrastruktur dient; und
eine vergangene Zeit seit einer Instantiierung der VNF auf dem Prozessor.

8. Datensammelknoten nach Anspruch 7, wobei die erste Leistungsmaßzahl für den ersten Trägerverarbeitungsknoten und die zweite Leistungsmaßzahl für den zweiten Trägerverarbeitungsknoten zusammen für jedes des einen oder der mehreren Intervalle oder Ereignisse empfangen und voneinander durch Knotenkennungsetiketten unterschieden werden, die jeweils dem ersten und dem zweiten Trägerverarbeitungsknoten entsprechen.

9. Datensammelknoten nach Anspruch 7 oder 8, ferner umfassend Bestimmen einer Trägerpfadtopologie für die Datensitzung, basierend auf Knotenkennungsetiketten und Abschlussetiketten, die in der empfangenen ersten und der empfangenen zweiten Leistungsmaßzahl für mindestens den ersten und den zweiten Trägerverarbeitungsknoten eingeschlossen sind.

10. Datensammelknoten nach Anspruch 9, ferner umfassend Erzeugen einer Darstellung der bestimmten Trägerpfadtopologie zur Anzeige, wobei die Darstellung Abbildungen jedes Trägerverarbeitungsknotens in der bestimmten Trägerpfadtopologie einschließt und ferner Darstellungen von mindestens der ersten und der zweiten Leistungsmaßzahl für mindestens den ersten und den zweiten Trägerverarbeitungsknoten einschließt.

11. Datensammelknoten nach Anspruch 10, ferner umfassend Aktualisieren der Darstellung der bestimmten Trägerpfadtopologie als Reaktion auf das Empfangen aktualisierter Trägerpfadtopologieinformationen für einen oder mehrere Trägerverarbeitungsknoten in dem Mehrknoten-Trägerpfad.

12. Datensammelknoten nach Anspruch 10, ferner umfassend Bestimmen eines geografischen Orts für jeden von zwei oder mehr Trägerverarbeitungsknoten in der bestimmten Mehrknoten-Trägerpfadtopologie, wobei Erzeugen der Darstellung der bestimmten Trägerpfadtopologie zur Anzeige Überlagern der Abbildungen jedes Trägerverarbeitungsknotens in der bestimmten Trägerpfadtopologie und Verbindungen zwischen den Trägerverarbeitungsknoten auf einer Abbildung einer Karte basierend auf den bestimmten geografischen Orten umfasst.

13. Computerprogrammprodukt, umfassend einen computerlesbaren Speicher, auf dem Anweisungen gespeichert sind, die, wenn sie durch einen Netzknoten ausgeführt werden, den Netzknoten veranlassen, ein Verfahren nach einem der Ansprüche 1 bis 7 auszuführen.

## Revendications

1. Procédé dans un nœud de collecte de données opérationnel pour communiquer avec un premier nœud de traitement de porteuse dans un trajet de porteuse multi-nœud pour une session de données, dans lequel au moins le premier nœud de traitement de porteuse est une fonction réseau virtualisée, VNF, le procédé comprenant :
l'envoi (1610) au premier nœud de traitement de porteuse, d'une instruction pour rapporter une première métrique de performance se rapportant à la session de données pour au moins le premier nœud de traitement de porteuse ;
la réception (1620) de la première métrique de performance pour au moins le premier nœud de traitement de porteuse, la première métrique de performance incluant des informations se rapportant à une infrastructure prenant en charge la VNF du premier nœud de traitement de porteuse ;
la réception depuis le premier nœud de traitement de porteuse, d'une deuxième métrique de performance se rapportant à la session de données, pour un deuxième nœud de traitement de porteuse, pour chacun parmi un ou plusieurs intervalles ou événements pendant la session de données, dans lequel le deuxième nœud de traitement de porteuse est une VNF et la deuxième métrique de performance reçue du deuxième nœud de traitement de porteuse inclut des informations se rapportant à une infrastructure prenant en charge la VNF du deuxième nœud de traitement de porteuse ; et
la détermination (1630) d'une performance globale se rapportant à la session de données sur la base de la première métrique de performance reçue et de la deuxième métrique de performance reçue dans lequel les informations se rapportant à une infrastructure prenant en charge la VNF comprennent un ou plusieurs parmi :
une identification d'un type d'un processeur sur lequel la VNF est en cours d'exécution ;
une fréquence d'horloge du processeur ;
des caractéristiques de cache du processeur ;
un nombre de cœurs de processeur mis à disposition pour la VNF pour l'utilisation ;
une bande passante réseau physique totale disponible pour une utilisation par une ressource de calcul de l'infrastructure ;
un pourcentage d'unité centrale de traitement totale utilisée (CPU) ;
un pourcentage de bande passante réseau totale utilisée ;
un espace de stockage total disponible pour une utilisation par une ressource de calcul de l'infrastructure ;
un pourcentage de l'espace de stockage total utilisé ;
un nombre de machines virtuelles partageant les mêmes ressources de calcul ;
un emplacement géographique d'une infrastructure matérielle desservant la VNF ;
un nombre total de locataires que l'infrastructure dessert ; et
un temps écoulé depuis une instanciation de la VNF sur le processeur.

2. Procédé selon la revendication 1, dans lequel la première métrique de performance pour le premier nœud de traitement de porteuse et la deuxième métrique de performance pour le deuxième nœud de traitement de porteuse sont reçues ensemble, pour chacun parmi le ou les intervalles ou événements, et se distinguent l'une de l'autre par des étiquettes d'identificateur de nœud correspondant aux premier et deuxième nœuds de traitement de porteuse, respectivement.

3. Procédé selon la revendication 1 ou 2, comprenant en outre la détermination d'une topologie de trajet de porteuse pour la session de données, sur la base d'étiquettes d'identificateur de nœud et d'étiquettes de terminaison, incluses avec les première et deuxième métriques de performance reçues, pour au moins les premier et deuxième nœuds de traitement de porteuse.

4. Procédé selon la revendication 3, comprenant en outre la génération d'une représentation de la topologie de trajet de porteuse déterminée pour affichage, la représentation incluant des présentations de chaque nœud de traitement de porteuse dans la topologie de trajet de porteuse déterminée et incluant en outre des représentations d'au moins les première et deuxième métriques de performance pour au moins les premier et deuxième nœuds de traitement de porteuse.

5. Procédé selon la revendication 4, comprenant en outre la mise à jour de la représentation de la topologie de trajet de porteuse déterminée, en réponse à la réception d'informations de topologie de trajet de porteuse mises à jour pour un ou plusieurs nœuds de traitement de porteuse dans le trajet de porteuse multi-nœud.

6. Procédé selon la revendication 4, comprenant en outre la détermination d'un emplacement géographique pour chacun des deux nœuds de traitement de porteuse ou plus dans la topologie de trajet de porteuse multi-nœud déterminée, dans lequel la génération de la représentation de la topologie de trajet de porteuse déterminée pour affichage comprend la superposition des présentations de chaque nœud de traitement de porteuse dans la topologie de trajet de porteuse déterminée et des connexions entre les nœuds de traitement de porteuse sur une présentation d'une carte, sur la base des emplacements géographiques déterminés.

7. Nœud de collecte de données opérationnel pour communiquer avec un premier nœud de traitement de porteuse dans un trajet de porteuse multi-nœud pour une session de données, dans lequel le premier nœud de traitement de porteuse est une fonction réseau virtualisée, VNF, le nœud de collecte de données configuré pour :
envoyer au premier nœud de traitement de porteuse, une instruction pour rapporter une première métrique de performance se rapportant à la session de données pour au moins le premier nœud de traitement de porteuse ; recevoir la première métrique de performance pour au moins le premier nœud de traitement de porteuse, la première métrique de performance incluant des informations se rapportant à une infrastructure prenant en charge la VNF du premier nœud de traitement de porteuse ;
recevoir depuis le premier nœud de traitement de porteuse, une deuxième métrique de performance se rapportant à la session de données, pour un deuxième nœud de traitement de porteuse, pour chacun parmi un ou plusieurs intervalles ou événements pendant la session de données, dans lequel le deuxième nœud de traitement de porteuse est une VNF et la deuxième métrique de performance reçue du deuxième nœud de traitement de porteuse inclut des informations se rapportant à une infrastructure prenant en charge la VNF du deuxième nœud de traitement de porteuse ; et
déterminer une performance globale se rapportant à la session de données sur la base de la première métrique de performance reçue et de la deuxième métrique de performance reçue dans lequel les informations se rapportant à une infrastructure prenant en charge la VNF comprennent un ou plusieurs parmi :
une identification d'un type d'un processeur sur lequel la VNF est en cours d'exécution ;
une fréquence d'horloge du processeur ;
des caractéristiques de cache du processeur ;
un nombre de cœurs de processeur mis à disposition pour la VNF pour l'utilisation ;
une bande passante réseau physique totale disponible pour une utilisation par une ressource de calcul de l'infrastructure ;
un pourcentage d'unité centrale de traitement totale utilisée (CPU) ;
un pourcentage de bande passante réseau totale utilisée ;
un espace de stockage total disponible pour une utilisation par une ressource de calcul de l'infrastructure ;
un pourcentage de l'espace de stockage total utilisé ;
un nombre de machines virtuelles partageant les mêmes ressources de calcul ;
un emplacement géographique d'une infrastructure matérielle desservant la VNF ;
un nombre total de locataires que l'infrastructure dessert ; et
un temps écoulé depuis une instanciation de la VNF sur le processeur.

8. Nœud de collecte de données selon la revendication 7, dans lequel la première métrique de performance pour le premier nœud de traitement de porteuse et la deuxième métrique de performance pour le deuxième nœud de traitement de porteuse sont reçues ensemble, pour chacun parmi le ou les intervalles ou événements, et se distinguent l'une de l'autre par des étiquettes d'identificateur de nœud correspondant aux premier et deuxième nœuds de traitement de porteuse, respectivement.

9. Nœud de collecte de données selon la revendication 7 ou 8, comprenant en outre la détermination d'une topologie de trajet de porteuse pour la session de données, sur la base d'étiquettes d'identificateur de nœud et d'étiquettes de terminaison, incluses avec les première et deuxième métriques de performance reçues, pour au moins les premier et deuxième nœuds de traitement de porteuse.

10. Nœud de collecte de données selon la revendication 9, comprenant en outre la génération d'une représentation de la topologie de trajet de porteuse déterminée pour affichage, la représentation incluant des présentations de chaque nœud de traitement de porteuse dans la topologie de trajet de porteuse déterminée et incluant en outre des représentations d'au moins les première et deuxième métriques de performance pour au moins les premier et deuxième nœuds de traitement de porteuse.

11. Nœud de collecte de données selon la revendication 10, comprenant en outre la mise à jour de la représentation de la topologie de trajet de porteuse déterminée, en réponse à la réception d'informations de topologie de trajet de porteuse mises à jour pour un ou plusieurs nœuds de traitement de porteuse dans le trajet de porteuse multi-nœud.

12. Nœud de collecte de données selon la revendication 10, comprenant en outre la détermination d'un emplacement géographique pour chacun des deux nœuds de traitement de porteuse ou plus dans la topologie de trajet de porteuse multi-nœud déterminée, dans lequel la génération de la représentation de la topologie de trajet de porteuse déterminée pour affichage comprend la superposition des présentations de chaque nœud de traitement de porteuse dans la topologie de trajet de porteuse déterminée et des connexions entre les nœuds de traitement de porteuse sur une description d'une carte, sur la base des emplacements géographiques déterminés.

13. Produit programme informatique comprenant une mémoire lisible par ordinateur stockant des instructions sur celle-ci qui, lorsqu'elles sont exécutées par un nœud de réseau, amènent le nœud de réseau à effectuer un procédé selon l'une quelconque des revendications 1 à 7.
